# EUROPEAN PATENT APPLICATION

(11) **EP 3 196 220 A1**
(43) Date of publication of application: **26.07.2017**
(21) Application number: 15835606.3
(22) Date of filing: 28.08.2015
(51) Int. Cl.: C08G 18/38, C08G 18/74, G02B 1/04

(54) **OPTICAL RESIN COMPOSITION, OPTICAL ELEMENT OBTAINED BY CURING OPTICAL RESIN COMPOSITION, AND PLASTIC LENS FOR EYEGLASSES**

(30) Priority: 29.08.2014 JP 2014175184
(71) Applicant: Hoya Lens Thailand Ltd., Patumthani (TH)
(72) Inventor: KOUSAKA, Masahisa, Tokyo 161-8525 (JP); TASAKI, Natsumi, Tokyo 161-8525 (JP)
(74) Representative: Hoffmann Eitle
(86) International application number: PCT/JP2015/074479
(87) International publication number: WO 2016/031975

(57) **Abstract**

An embodiment of the present invention provides: an optical resin composition from which an optical element that has excellent heat resistance can be obtained; an optical element obtained by curing the optical resin composition; and a plastic lens for eyeglasses. [1] An optical resin composition containing a polyiso(thio)cyanate component that includes a compound represented by formula (I-p) or formula (II-p), and a polythiol component that includes a polythiol compound that has sulfide bonds and/or disulfide bonds. [2] An optical element obtained by curing the optical resin composition of [1]. [3] A plastic lens for eyeglasses obtained by curing the optical resin composition of [1].

## Description

### Technical Field

The present invention relates to an optical resin composition, an optical element obtained by curing the optical resin composition, and a plastic lens for eyeglasses.

### Background Art

A plastic is light, hardly broken, and is easily stained as compared to glass. Therefore, it has been used for an optical component such as a lens for eyeglasses recently.

In a lens for eyeglasses or the like, a plastic material capable of being thinner and having a high refractive index has been strongly desired, and a thiourethane material obtained by a reaction between a polyisocyanate compound and a polythiol compound has become mainstream.

For example, Patent Literature 1 describes a high refractive index thiourethane material obtained by a reaction between m-xylylene diisocyanate (m-XDI) and 1,2-bis[(2-mercaptoethyl) thio]-3-mercaptopropane. A thiourethane material described in Example 9 of Patent Literature 1 has a refractive index of 1.67. However, this thiourethane material does not have sufficient heat resistance. As a result, for example, at 90 to 95°C which is a general dyeing temperature of a plastic lens, a lens is deformed disadvantageously because the temperature is near a heat resistant temperature of a resin.

In an attempt to improve heat resistance of a thiourethane material having a high refractive index (for example, a refractive index of 1.66 or more), various polythiols have been studied.

For example, Patent Literature 2 has proposed a novel tetrafunctional or higher polythiol, and describes that a thiourethane material using the polythiol has a high refractive index, low dispersion, excellent heat resistance, and excellent productivity.

### Citation List

### Patent Literature

Patent Literature 1: JP 2-270859 A
Patent Literature 2: JP 7-252207 A

### Summary of Invention

### Technical Problem

An object of an Example of the present invention is to provide an optical resin composition from which an optical element having high heat resistance can be obtained, an optical element obtained by curing the optical resin composition, and a plastic lens for eyeglasses.

### Solution to Problem

The present inventors have found that heat resistance can be improved and the above problems can be solved by using a specific polythiol compound and a specific isocyanate compound.

That is, the present invention relates to [1] to [3].
[1] An optical resin composition containing a polyiso(thio)cyanate component containing a compound represented by the following formula (I-p) or formula (II-p), and a polythiol component containing a polythiol compound having a sulfide bond and/or a disulfide bond. 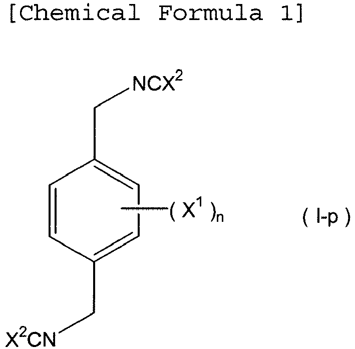 (In formula (I-p), X¹s each independently represent a chlorine atom or a bromine atom, X²s each independently represent an oxygen atom or a sulfur atom, and n represents an integer of 0 to 4.) 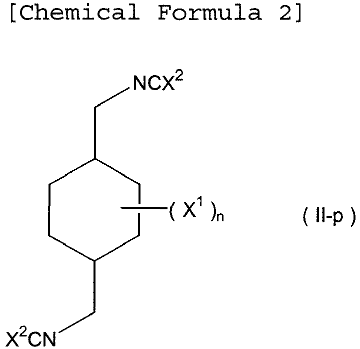 (In formula (II-p), X¹s each independently represent a chlorine atom or a bromine atom, X²s each independently represent an oxygen atom or a sulfur atom, and n represents an integer of 0 to 4.)
[2] An optical element obtained by curing the optical resin composition described in [1].
[3] A plastic lens for eyeglasses obtained by curing the optical resin composition described in [1].

### Advantageous Effects of Invention

According to the above Example, an optical resin composition from which an optical element having high heat resistance can be obtained, an optical element obtained by curing the optical resin composition, and a plastic lens for eyeglasses can be provided.

### Description of Embodiments

### [Optical resin composition]

An optical resin composition of the present invention contains a polyiso(thio)cyanate component containing a compound represented by the following formula (I-p) or formula (II-p), and a polythiol component containing a polythiol compound having a sulfide bond and/or a disulfide bond. 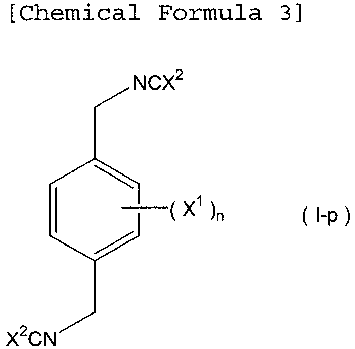 (In formula (I-p), X¹s each independently represent a chlorine atom or a bromine atom, X²s each independently represent an oxygen atom or a sulfur atom, and n represents an integer of 0 to 4.) 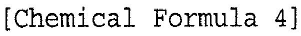 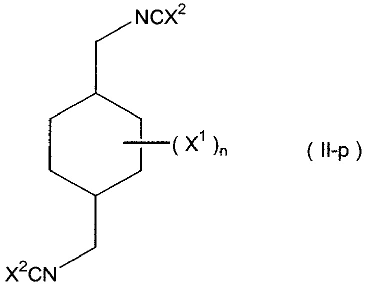 (In formula (II-p), X¹s each independently represent a chlorine atom or a bromine atom, X²s each independently represent an oxygen atom or a sulfur atom, and n represents an integer of 0 to 4.)

Here, the optical resin composition means a curable resin composition capable of obtaining an optical element such as a lens by curing the optical resin composition.

### [Polyiso(thio)cyanate component]

The optical resin composition of the present invention contains a compound represented by the following formula (I-p) or formula (II-p) as a polyiso(thio)cyanate component from a viewpoint of increasing heat resistance. In the present invention, polyiso(thio)cyanate means at least one kind selected from the group consisting of polyisocyanate and polyisothiocyanate, and is preferably polyisocyanate.

### <<Compound represented by formula (I-p)>>

Preferable examples of a compound represented by the following formula (I-p) (hereinafter, also simply referred to as "compound Ip") include the following.

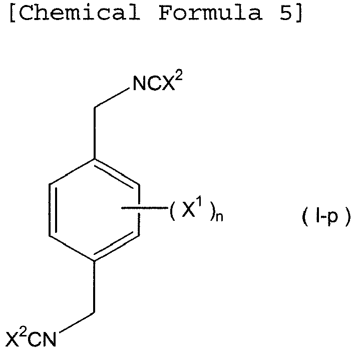

In formula (I-p), X¹s each independently represent a chlorine atom or a bromine atom, X²s each independently represent an oxygen atom or a sulfur atom, and n represents an integer of 0 to 4.

X² is preferably an oxygen atom.

n is preferably 0 or 1, and more preferably 0.

Compound Ip is preferably the following compound I-p1.

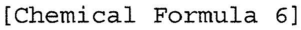

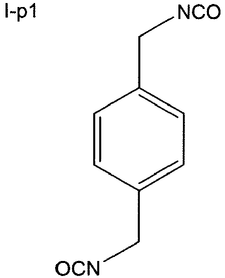

In the polyiso(thio)cyanate component, the amount of compound Ip is preferably 50% by mass or more, more preferably from 55 to 100% by mass, still more preferably from 60 to 100% by mass, and further still more preferably from 70 to 100% by mass.

The optical resin composition of the present invention may contain a compound represented by the following formula (I-m) (hereinafter, also simply referred to as "compound Im").

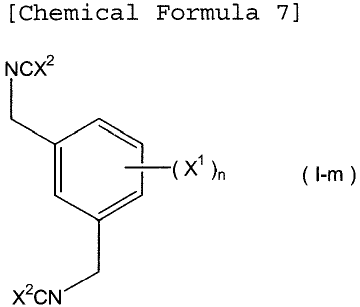

In formula (I-m), X¹s each independently represent a chlorine atom or a bromine atom, X²s each independently represent an oxygen atom or a sulfur atom, and n represents an integer of 0 to 4.

X² is preferably an oxygen atom.

n is preferably 0 or 1, and more preferably 0.

Compound Im is preferably the following compound I-m1.

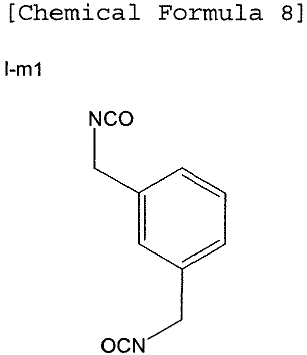

In an embodiment of the present invention, a poly(thio)isocyanate component of the optical resin composition is formed preferably of compound Ip and compound Im, and more preferably of compound I-p1 and compound I-m1.

In the polyiso(thio)cyanate component, the amount of compound Im is preferably 50% by mass or less, more preferably from 0 to 45% by mass, and still more preferably from 0 to 30% by mass.

Amass ratio (compound Ip/compound Im) of compound Ip with respect to compound Im is preferably 50/50 or more, more preferably from 55/45 to 100/0, and still more preferably from 70/30 to 100/0.

### <<Compound represented by formula (II-p)>>

Preferable examples of a compound represented by the following formula (II-p) (hereinafter, also simply referred to as "compound IIp") include the following.

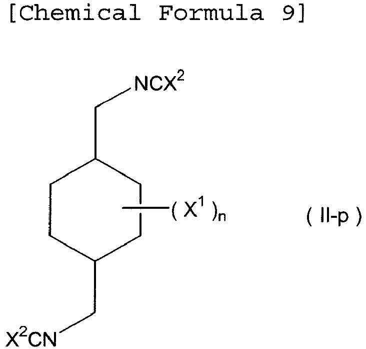

In formula (II-p), X¹, X², and n have the same meanings as those in formula (I-p), and preferable examples thereof are similar thereto.

Compound IIp is preferably the following compound II-p1.

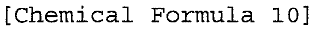

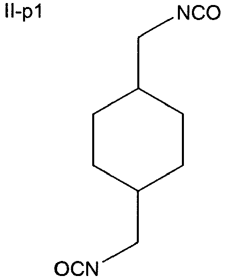

In the polyiso(thio)cyanate component, the amount of compound IIp is preferably 50% by mass or more, more preferably from 55 to 100% by mass, still more preferably from 60 to 100% by mass, and further still more preferably from 70 to 100% by mass.

The optical resin composition of the present invention may contain a compound represented by the following formula (II-m) (hereinafter, also simply referred to as "compound IIm").

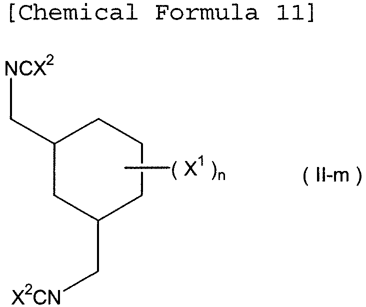

In formula (II-m), X¹, X², and n have the same meanings as those in formula (II-p), and preferable examples thereof are similar thereto.

Compound IIm is preferably the following compound II-ml.

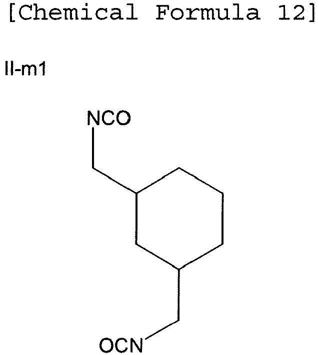

In an embodiment of the present invention, the poly(thio)isocyanate component of the optical resin composition is formed preferably of compound IIp and compound IIm, and more preferably of compound II-pl and compound II-ml.

In the polyiso(thio)cyanate component, the amount of compound IIm is preferably 50% by mass or less, more preferably from 0 to 45% by mass, and still more preferably from 0 to 30% by mass.

A mass ratio (compound IIp/compound IIm) of compound IIp with respect to compound IIm is preferably 50/50 or more, more preferably from 55/45 to 100/0, and still more preferably from 70/30 to 100/0.

The optical resin composition of the present invention can contain a compound having two isocyanate groups other than the above compounds or a compound having three or more isocyanate groups as another polyiso(thio)cyanate component.

Examples of the compound having two isocyanate groups other than the above compounds include hexamethylene diisocyanate, isophorone diisocyanate, 2,5-bis(isocynatemethyl)-1,4-dithiane, and 2,5-bis(isocynateethyl)-1,4-dithiane.

Examples of the compound having three or more isocyanate groups include lysine triisocyanate, 1,6,11-undecane triisocyanate, and triphenylmethane triisocyanate.

### [Polythiol component]

The optical resin composition of the present invention contains a polythiol compound having a sulfide bond and/or a disulfide bond as a polythiol component from a viewpoint of increasing a refractive index. In the present invention, "a sulfide bond and/or a disulfide bond" means at least one kind selected from the group consisting of a sulfide bond and a disulfide bond, and is preferably a sulfide bond.

In addition, by using a polythiol compound having a sulfide bond and/or a disulfide bond, and compound Ip or compound IIp in combination thereof, an improvement effect of heat resistance due to addition of compound Ip or compound IIp can be more significant.

### <<Polythiol compound having sulfide bond and/or disulfide bond>>

The polythiol compound preferably has two or more sulfide bonds and/or disulfide bonds in total from a viewpoint of increasing a refractive index.

The polythiol compound preferably contains a compound having three or more mercapto groups as a polythiol component from a viewpoint of obtaining an excellent appearance of a resulting optical element.

One of preferable aspects is a polythiol compound containing a compound having three or more mercapto groups in addition to a compound having two mercapto groups as a polythiol component from a viewpoint of adjusting transparency of a resulting optical element.

The polythiol component preferably contains a compound having a refractive index of 1.62 or more.

Examples of the compound having a refractive index of 1.62 or more include 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, 4,8-bis(mercaptomethyl)-3,6,9-trithiaundecane-1,11-dithiol, 1,4-dithiane-2,5-di(methanethiol), and 1,1,3,3-tetrakis(mercaptomethylthio) propane.

In the polythiol component, the amount of the compound having a refractive index of 1.62 or more is preferably 50% by mass or more, more preferably from 70 to 100% by mass, and still more preferably from 80 to 100% by mass.

Example of the polythiol compound having three or more mercapto groups include 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, 4,8-bis(mercaptomethyl)-3,6,9-trithiaundecane-1,11-dithiol, 1,2,3-tris(mercaptomethylthio) benzene, 1,2,4-tris(mercaptomethylthio) benzene, 1,3,5-tris(mercaptomethylthio) benzene, 1,2,3-tris(mercaptoethylthio) benzene, 1,2,4-tris(mercaptoethylthio) benzene, 1,3,5-tris(mercaptoethylthio) benzene, 1,1,3,3-tetrakis(mercaptomethylthio) propane, 1,2,3,4-tetrakis(mercaptomethylthio) benzene, 1,2,3,5-tetrakis(mercaptomethylthio) benzene, 1,2,4,5-tetrakis(mercaptomethylthio) benzene, 1,2,3,4-tetrakis(mercaptoethylthio) benzene, 1,2,3,5-tetrakis(mercaptoethylthio) benzene, and 1,2,4,5-tetrakis(mercaptoethylthio) benzene. These polythiol compounds may be used singly or in combination of two or more kinds thereof.

Among the polythiol compounds each having three or more mercapto groups, at least one kind selected from the group consisting of 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, 4,8-bis(mercaptomethyl)-3,6,9-trithiaundecane-1,11-dithiol, and 1,1,3,3-tetrakis(mercaptomethylthio) propane is preferable. Particularly, 2,3-bis(2-mercaptoethylthio) propane-1-thiol is preferable from a viewpoint of an excellent dyeing property.

Example of the polythiol compound having two mercapto groups include 1,4-dithiane-2,5-di(methanethiol), 1,3-dithiane-4,5-di(methanethiol), 1,2-bis(mercaptomethylthio) benzene, 1,3-bis(mercaptomethylthio) benzene, 1,4-bis(mercaptomethylthio) benzene, 1,2-bis(mercaptoethylthio) benzene, 1,3-bis(mercaptoethylthio) benzene, 1,4-bis (mercaptoethylthio) benzene, bis(mercaptomethyl) sulfide, bis(mercaptoethyl) sulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane, 1,2-bis(3-mercaptopropylthio) ethane, 1,3-bis(mercaptomethylthio) propane, 1,3-bis(2-mercaptoethylthio) propane, 1,3-bis(3-mercaptopropylthio) propane, 1,2-bis(2-mercaptoethylthio)-3-mercapto propane, 3,4-thiophene dithiol, tetrahydrothiophene-2,5-bis-mercaptomethyl, 2,5-dimercapto-1,3,4-thiadiazole, and 2,5-dimercapto-1,4-dithiane.

Among the polythiol compounds each having two mercapto groups, 1,4-dithiane-2,5-di(methanethiol) is more preferable.

These polythiol compounds may be used singly or in combination of two or more kinds thereof.

Among these polythiol compounds, at least one kind selected from the group consisting of a mixture of 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol, 1,4-dithiane-2,5-di(methanethiol), bis(mercaptoethyl) sulfide, and 1,1,3,3-tetrakis(mercaptomethylthio) propane is preferable. At least one kind selected from the group consisting of a mixture of 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol, 1,4-dithiane-2,5-di(methanethiol), and 1,1,3,3-tetrakis(mercaptomethylthio) propane is more preferable. At least one kind selected from the group consisting of 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol is still more preferable.

### <<Other polythiol compound>>

The optical resin composition of the present invention may contain a polythiol compound not having a sulfide bond and/or a disulfide bond (hereinafter, also referred to as "other polythiol compound") as a polythiol component.

Examples of the other polythiol compound include pentaerythritol tetrakismercapto acetate, pentaerythritol tetrakismercapto propionate, trimethylolpropane trismercapto acetate, trimethylolpropane trismercapto propionate, dimercaptomethyl ether, and dimercaptoethyl ether.

In the polythiol component, the amount of the polythiol compound having a sulfide bond and/or a disulfide bond is preferably 40% by mass or more, more preferably from 50 to 100% by mass, and still more preferably from 60 to 100% by mass.

In the polythiol component, the amount of the compound having three or more mercapto groups is preferably 40% by mass or more, more preferably from 50 to 100% by mass, and still more preferably from 60 to 100% by mass.

In the polythiol component, the amount of the compound having two mercapto groups is preferably 60% by mass or less, more preferably from 0 to 50% by mass, and still more preferably from 0 to 40% by mass.

In the polythiol component, the amount of the other polythiol compound is preferably 60% by mass or less, more preferably from 0 to 50% by mass, still more preferably from 0 to 45% by mass, and further still more preferably from 10 to 45% by mass.

The optical resin composition of the present invention preferably contains a compound having three or more active hydrogen atoms.

Examples of the compound having three or more active hydrogen atoms include a compound other than the above polythiol compounds, such as a polyol compound or a polyamine compound.

Examples of the polyol compound include an aliphatic polyol such as trimethylolethane, trimethylolpropane, butanetriol, 1,2-methyl glucoside, pentaerythritol, dipentaerythritol, tripentaerythritol, sorbitol, erythritol, threitol, ribitol, arabinitol, xylitol, allitol, mannitol, dulcitol, iditol, inositol, hexanetriol, diglyperol, tris(2-hydroxyethyl) isocyanurate, cyclohexanetriol, maltitol, or lactitol; an aromatic polyol such as trihydroxy naphthalene, tetrahydroxy naphthalene, benzene triol, biphenyl tetraol, pyrogallol, (hydroxynaphthyl) pyrogallol, or trihydroxy phenanthrene; a polyol containing a sulfur atom, such as tetrakis(4-hydroxy-2-thiabutyl) methane; and a polyalkylene oxide ether of a polyol, such as polyoxypropylene glyceryl ether, polyoxyethylene glyceryl ether, polyoxypropylene trimethylol propyl ether, or polyoxypropylene pentaerythritol ether.

These polyol compounds may be used singly or in combination of two or more kinds thereof. Preferable examples of the polyol compound are similar to the above.

Examples of the polyamine compound include 3,5-diethyl-2,4-diaminotoluene, 3,5-diethyl-2,6-diaminotoluene, 3,5-dithiomethyl-2,4-diaminotoluene, and 3,5-dithiomethyl-2,6-diaminotoluene.

In the resin composition, the amount of the compound having three or more active hydrogen atoms other than the above polythiol compounds is preferably from 0 to 40% by mass, more preferably from 5 to 30% by mass, and still more preferably from 10 to 20% by mass.

The optical resin composition of the present invention preferably contains a compound having two or more episulfide groups.

Examples of the compound having two or more episulfide groups include an episulfide compound having an alicyclic skeleton, such as 1,3 and 1,4-bis(β-epithiopropylthio) cyclohexane, 1,3 and 1,4-bis(β-epithiopropylthiomethyl) cyclohexane, bis[4-(β-epithiopropylthio) cyclohexyl] methane, 2,2-bis[4-(β-epithiopropylthio) cyclohexyl] propane, or bis[4-(β-epithiopropylthio) cyclohexyl] sulfide; an episulfide compound having an aromatic skeleton, such as 1,3 and 1,4-bis(β-epithiopropylthio) benzene, 1,3 and 1,4-bis(β-epithiopropylthiomethyl) benzene, bis[4-(β-epithiopropylthio) phenyl] methane, 2,2-bis[4-(β-epithiopropylthio) phenyl] propane, bis[4-(β-epithiopropylthio) phenyl] sulfide, bis[4-(β-epithiopropylthio) phenyl] sulfine, or 4,4-bis(β-epithiopropylthio) biphenyl; an episulfide compound having a dithiane ring skeleton, such as 2,5-bis(β-epithiopropylthiomethyl)-1,4-dithiane, 2,5-bis(β-epithiopropylthioethyl thiomethyl)-1,4-dithiane, 2,5-bis(β-epithiopropylthioethyl)-1,4-dithiane, or 2,3,5-tri(β-epithiopropylthioethyl)-1,4-dithiane; and an episulfide compound having an aliphatic skeleton, such as 2-(2-β-epithiopropylthioethylthio)-1,3-bis(β-epithiopropylt hio) propane, 1,2-bis[(2-β-epithiopropylthioethyl)thio]-3-(β-epithiopropy lthio) propane, tetrakis(β-epithiopropylthiomethyl) methane, 1,1,1-tris(β-epithiopropylthiomethyl) propane, or bis-(β-epithiopropyl) sulfide.

In the resin composition, the content of the compound having two or more episulfide groups is preferably from 0 to 40% by mass, more preferably from 5 to 30% by mass, and still more preferably from 10 to 20% by mass.

Among the above examples, preferable examples of a combination of a polyiso (thio) cyanate component and a polythiol component include the following.
(1) The polyiso(thio)cyanate component contains compound Ip, and the polythiol component contains 2,3-bis(2-mercaptoethylthio) propane-1-thiol.
(2) The polyiso(thio)cyanate component contains compound Ip, and the polythiol component contains a mixture of 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol.
(3) The polyiso(thio)cyanate component contains compound Ip, and the polythiol component contains 1,4-dithiane-2,5-di(methanethiol) and 2,3-bis(2-mercaptoethylthio) propane-1-thiol.
(4) The polyiso(thio)cyanate component contains compound Ip, and the polythiol component contains 1,4-dithiane-2,5-di(methanethiol) and a mixture of 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol.
(5) The polyiso(thio)cyanate component contains compound Ip, and the polythiol component contains 1,4-dithiane-2,5-di(methanethiol) and trimethylolpropane trismercapto propionate.
(6) The polyiso(thio)cyanate component contains compound Ip, and the polythiol component contains 1,1,3,3-tetrakis(mercaptomethylthio) propane.
(7) The polyiso (thio) cyanate component contains compound IIp, and the polythiol component contains 1,4-dithiane-2,5-di(methanethiol) and pentaerythritol tetrakismercapto propionate.
(8) The polyiso(thio)cyanate component contains compound IIp, and the polythiol component contains 2,3-bis(2-mercaptoethylthio) propane-1-thiol and pentaerythritol tetrakismercapto propionate.
(9) The polyiso(thio)cyanate component contains compound IIp, and the polythiol component contains 1,4-dithiane-2,5-di(methanethiol) and pentaerythritol tetrakismercapto acetate.
(10) The polyiso(thio) cyanate component contains compound IIp, and the polythiol component contains a mixture of 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol.

### [Method for manufacturing optical element]

A method for manufacturing the optical element of the present invention includes a step of curing the optical resin composition.

As a blending ratio between a polyiso(thio)cyanate component and a polythiol component, a molar ratio of NCX² group/SH group is usually from 0.5 to 2.0, and preferably from 0.95 to 1.05.

However, the X² has the same meaning as X² in formulae (I-p), (I-m), (II-p), and (II-m).

In addition to the raw material monomers, various additives such as a polymerization catalyst such as an organotin including dimethyl tin dichloride, a release agent such as butoxyethyl acid phosphate, an antioxidant, a UV stabilizer, an anti-coloring agent, a bluing agent, or a fluorescent whitening agent, used in an optical element as required, may be used.

When the optical element is a plastic lens, polymerization is preferably performed by a casting polymerization method.

For example, polymerization is performed by pouring a mixture obtained by mixing the monomer compositions into a mold obtained by combining a glass or metal mold and a resin gasket.

A polymerization condition can be set appropriately according to the optical resin composition.

A polymerization initiation temperature is usually from 0 to 50°C, and preferably from 20 to 40°C.

The temperature is raised from the polymerization initiation temperature, and then heating is performed to perform curing formation. For example, the raised temperature is usually from 110 to 130°C. Temperature rising time to the temperature is preferably from 5 to 48 hours, more preferably from 10 to 40 hours, and still more preferably from 20 to 30 hours. Heating time after the temperature has been raised is preferably from 10 to 30 hours, and more preferably from 20 to 30 hours.

### [Optical element]

The optical element of the present invention is obtained by curing the optical resin composition.

Examples of the optical element include a plastic lens of eyeglasses, a camera, or the like, a prism, an optical fiber, a recording medium substrate used for an optical disk, a magnetic disk, or the like, and an optical filter attached to a display of a word processor or the like.

A preferable optical element is a plastic lens, particularly a plastic lens for eyeglasses requiring a high refractive index because of having excellent transparency without turbidity or clouding. The refractive index of the optical element is preferably 1.59 or more, and more preferably 1.66 or more.

In the present invention, as for the above examples of components, contents, and physical properties, matters exemplified or described as a preferable range in the detailed description of the invention may be combined with each other arbitrarily.

In addition, by adjusting the composition described in Examples so as to be the composition described in the detailed description of the invention, the invention can be performed in a similar manner to Examples in the entire claimed composition range.

### Examples

Hereinafter, the present invention will be described in detail based on Examples, but the present invention is not limited to the Examples. Note that physical properties of plastic lenses for eyeglasses obtained in Examples and Comparative Examples were evaluated as follows.

### (1) Appearance

A lens was irradiated with a fluorescent light in a darkroom, and coloring of the lens and transparency thereof were evaluated.

### (2) Refractive index and Abbe number

Measurement was performed with e-line at 23°C using a precision refractometer KPR-2000 manufactured by Shimadzu Device Corporation.

### (3) Heat resistance

Measurement was performed using a thermal analysis apparatus TMA8310S manufactured by Rigaku Corporation by a penetration method (sample thickness: 3 mm, pin diameter: 0.5 mm, weight: 10 g, temperature rising rate: 10°C/min). A peak temperature (glass transition temperature Tg) at which thermal expansion was changed was measured. A higher glass transition temperature Tg means better heat resistance.

### <Example 1>

To 51.91 parts by mass of p-xylylene diisocyanate as a polyisocyanate compound in the present invention, 0.007 parts by mass of dimethyltin dichloride as a catalyst, 0.14 parts by mass of JP506H manufactured by Johoku Chemical Co. , Ltd. as an internal release agent, and 0.10 parts by mass of SEESORB707 manufactured by Shipro Kasei Kaisha, Ltd. as an ultraviolet absorber were added, stirred, and dissolved. Thereafter, 48.09 parts by mass of 2,3-bis(2-mercaptoethylthio) propane-1-thiol as a polythiol compound was added thereto. The resulting mixture was stirred and mixed under a reduced pressure of about 133 Pa for 30 minutes to obtain an optical resin composition.

This optical resin composition was injected into a mold for a lens formed of a glass mold and a resin gasket, prepared in advance. The temperature thereof was gradually raised in an electric furnace from 20°C to 120°C over about 22 hours, and was maintained at 120°C for three hours to perform polymerization.

After completion of the polymerization, the resin gasket was removed, and then the glass mold was released to obtain a plastic lens.

Evaluation of the above (1) to (3) was performed for the resulting lens, and results thereof are indicated in Table.

### <Examples 2 to 9, Comparative Examples 1 to 3, and Reference Examples 1 and 2>

Plastic lenses in Examples 2 to 9, Comparative Examples 1 to 3, and Reference Examples 1 and 2 were obtained in a similar manner to Example 1 except that compositions indicated in Table 1 were used as compositions of the isocyanate compound and the thiol compound. Evaluation of the above (1) to (3) was performed for the resulting lenses, and results thereof are indicated in Table.

### <Example 10>

To 46.68 parts by mass of 1,4-(diisocyanatemethyl) cyclohexane as a polyisocyanate compound in the present invention, 0.1 parts by mass of dimethyltin dichloride as a catalyst, 0.20 parts by mass of JP506H manufactured by Johoku Chemical Co. , Ltd. as an internal release agent, and 0.10 parts by mass of SEESORB707 manufactured by Shipro Kasei Kaisha, Ltd. as an ultraviolet absorber were added, stirred, and dissolved. Thereafter, 35.71 parts by mass of 1,4-dithiane-2,5-di(methanethiol) as a polythiol compound and 17.61 parts by mass of pentaerythritol tetrakismercapto propionate were added thereto. The resulting mixture was stirred and mixed under a reduced pressure of about 133 Pa for 30 minutes to obtain an optical resin composition.

This optical resin composition was injected into a mold for a lens formed of a glass mold and a resin gasket, prepared in advance. The temperature thereof was gradually raised in an electric furnace from 20°C to 120°C over about 22 hours, and was maintained at 120°C for three hours to perform polymerization.

After completion of the polymerization, the resin gasket was removed, and then the glass mold was released to obtain a plastic lens.

Evaluation of the above (1) to (3) was performed for the resulting lens, and results thereof are indicated in Table.

### <Examples 11 to 14 and Comparative Examples 4 and 5>

Plastic lenses in Examples 11 to 14 and Comparative Examples 4 and 5 were obtained in a similar manner to Example 10 except that compositions indicated in Table 2 were used as compositions of the isocyanate compound and the thiol compound. Evaluation of the above (1) to (3) was performed for the resulting lenses, and results thereof are indicated in Table.

Components indicated in Tables are as follows.
p-XDI: p-xylylene diisocyanate (compound I-pl)
m-XDI: m-xylylene diisocyanate (compound I-ml)
p-H6XDI: 1,4-di(isocyanatemethyl) cyclohexane (compound II-pl)
m-H6XDI: 1,3-di(isocyanatemethyl) cyclohexane (compound II-ml)
BIMD: 2,5-bis(isocynatemethyl) -1,4-dithiane
HDI: hexamethylene diisocyanate
B-1: 2,3-bis(2-mercaptoethylthio) propane-1-thiol
B-2: mixture of 5,7-bis(mercaptomethyl)-3,6,9-tristhiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol
B-3: 1,4-dithiane-2,5-di(methanethiol)
B-4: pentaerythritol tetrakismercapto propionate
B-5: pentaerythritol tetrakismercapto acetate
B-6: trimethylolpropane trismercapto propionate
B-7: 1,1,3,3-tetrakis(mercaptomethylthio) propane

**[Table 1]**

| | Polyisocyanate compound (% by mass)*1 | | | | Polythiol compound (% by mass) *1 | | | | NCO/SH | Appearance | Refractive index | Abbe number | Heat resistance (Tg [°C]) |
|---|---|---|---|---|---|---|---|---|---|---|---|---|---|
| Example 1 | p-XDI | 51.91% | - | | B-1 | 48.09% | - | | 1/1 | Colorless and transparent | 1.66 | 32 | 106 |
| Example 2 | p-XDI | 25.95% | m-XDI | 25.95% | B-1 | 48.09% | - | | 1/1 | Colorless and transparent | 1.66 | 32 | 101 |
| Example 3 | p-XDI | 50.67% | - | | B-2 | 49.33% | - | | 1/1 | Colorless and transparent | 1.67 | 31 | 121 |
| Example 4 | p-XDI | 25.34% | m-XDI | 25.34% | B-2 | 49.33% | - | | 1/1 | Colorless and transparent | 1.67 | 31 | 109 |
| Example 5 | p-XDI | 49.50% | - | | B-3 | 27.91% | B-1 | 22.59% | 1/1 | Colorless and transparent | 1.67 | 32 | 110 |
| Example 6 | p-XDI | 48.77% | - | | B-3 | 27.50% | B-2 | 23.74% | 1/1 | Colorless and transparent | 1.67 | 32 | 118 |
| Example 7 | p-XDI | 32.36% | m-XDI | 10.79% | B-3 | 70.62% | B-6 | 29.38% | 1/1.1 | Colorless and transparent | 1.66 | 32 | 100 |
| Example 8 | p-XDI | 48.98% | - | | B-7 | 51.02% | - | | 1/1.1 | Colorless and transparent | 1.69 | 30 | 108 |
| Example 9 | p-XDI | 23.22% | BIMD | 28.41% | B-7 | 48.37% | - | | 1/1.1 | Colorless and transparent | 1.69 | 33 | 110 |
| Comparative Example 1 | m-XDI | 51.91% | - | | B-1 | 48.09% | - | | 1/1 | Colorless and transparent | 1.67 | 31 | 92 |
| Comparative Example 2 | m-XDI | 50.67% | - | | B-2 | 49.33% | - | | 1/1 | Colorless and transparent | 1.67 | 31 | 99 |
| Comparative Example 3 | m-XDI | 48.98% | - | | B-7 | 51.02% | - | | 1/1.1 | Colorless and transparent | 1.69 | 30 | 96 |
| Reference Example 1 | p-XDI | 43.52% | - | | B-4 | 56.48% | - | | 1/1 | Colorless and transparent | 1.60 | 36 | 100 |
| Reference Example 2 | m-XDI | 43.52% | - | | B-4 | 56.48% | - | | 1/1 | Colorless and transparent | 1.60 | 36 | 86 |

| | | | | | | | | | | | | | |
|---|---|---|---|---|---|---|---|---|---|---|---|---|---|
| *1: the amount with respect to the total amount of polyisocyanate compound and polythiol compound (% by mass) | | | | | | | | | | | | | |

**[Table 2]**

| | Polyisocyanate compound (% by mass)*1 | | | | Polythiol compound (% by mass) *1 | | | | NCO/SH | Appearance | Refractive index | Abbe number | Heat resistance (Tg [°C]) |
|---|---|---|---|---|---|---|---|---|---|---|---|---|---|
| Example 10 | p-H6XDI | 46.68% | - | | B-3 | 35.71% | B-4 | 17.61% | 1/1 | Colorless and transparent | 1.60 | 42 | 118 |
| Example 11 | p-H6XDI | 23.34% | m-H6XDI | 23.34% | B-3 | 35.71% | B-4 | 17.61% | 1/1 | Colorless and transparent | 1.60 | 42 | 112 |
| Example 12 | p-H6XDI | 49.93% | - | | B-1 | 31.23% | B-4 | 18.84% | 1/1 | Colorless and transparent | 1.60 | 42 | 112 |
| Example 13 | p-H6XDI | 23.77% | m-H6XDI | 23.77% | B-3 | 25.99% | B-5 | 26.47% | 1/1 | Colorless and transparent | 1.60 | 42 | 124 |
| Example 14 | p-H6XDI | 23.08% | HDI | 26.65% | B-2 | 50.27% | - | | 1/1 | Colorless and transparent | 1.59 | 42 | 113 |
| Comparative Example 4 | m-H6XDI | 46.68% | - | | B-3 | 35.71% | B-4 | 17.61% | 1/1 | Colorless and transparent | 1.60 | 42 | 92 |
| Comparative Example 5 | m-H6XDI | 47.54% | - | | B-3 | 25.99% | B-5 | 26.47% | 1/1 | Colorless and transparent | 1.60 | 42 | 118 |

| | | | | | | | | | | | | | |
|---|---|---|---|---|---|---|---|---|---|---|---|---|---|
| *1: the amount with respect to the total amount of polyisocyanate compound and polythiol compound (% by mass) | | | | | | | | | | | | | |

According to the resin composition of the present invention, an optical element having high heat resistance can be obtained. Therefore, the optical element can be applied to a plastic lens for eyeglasses requiring a high refractive index.

Finally, the present invention is summarized.

An optical resin composition contains a polyiso(thio)cyanate component containing a compound represented by the following formula (I-p) or formula (II-p), and a polythiol component containing a polythiol compound having a sulfide bond and/or a disulfide bond. 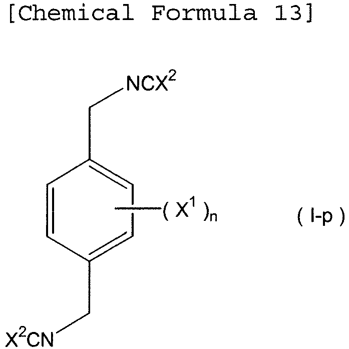 (In formula (I-p), X¹s each independently represent a chlorine atom or a bromine atom, X²s each independently represent an oxygen atom or a sulfur atom, and n represents an integer of 0 to 4.) 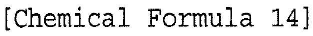 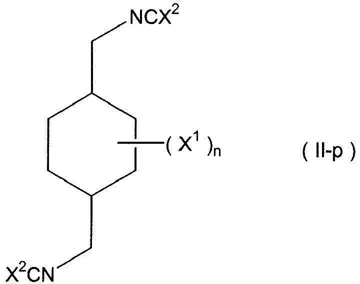 (In formula (II-p), X¹s each independently represent a chlorine atom or a bromine atom, X²s each independently represent an oxygen atom or a sulfur atom, and n represents an integer of 0 to 4.)

As described above, by containing compound Ip represented by formula (I-p), that is, a para-substituted aromatic polyiso(thio)cyanate component as a polyiso(thio)cyanate component, an optical element having excellent heat resistance can be obtained.

Compound Ip is preferably the following compound I-p1 from a viewpoint of obtaining excellent heat resistance.

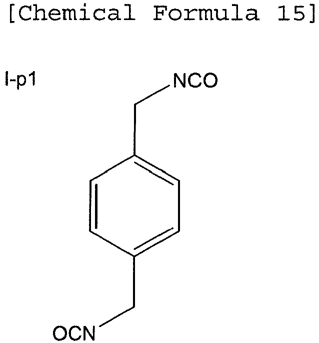

In the polyiso(thio)cyanate component, the amount of compound Ip is preferably 50% by mass or more, more preferably from 55 to 100% by mass, still more preferably from 60 to 100% by mass, and further still more preferably from 70 to 100% by mass from a viewpoint of obtaining the above effect.

The optical resin composition of the present invention may contain a compound represented by the following formula (I-m) (hereinafter, also simply referred to as "compound Im") in an amount of 50% by mass or less in the polyiso (thio) cyanate component. 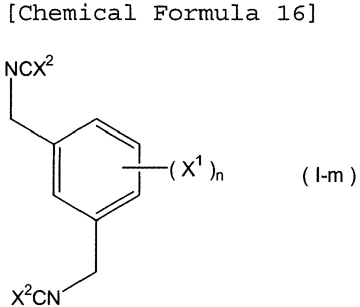 (In formula (I-m), X¹s each independently represent a chlorine atom or a bromine atom, X²s each independently represent an oxygen atom or a sulfur atom, and n represents an integer of 0 to 4.)

As described above, by containing compound IIp represented by formula (II-p), that is, a 1,4-substituted (that is, corresponding to para-substituted) hydrogenated aromatic polyiso(thio)cyanate component as a polyiso(thio)cyanate component, an optical element having excellent heat resistance can be obtained.
Compound IIp is preferably the following compound II-pl from a viewpoint of obtaining excellent heat resistance.

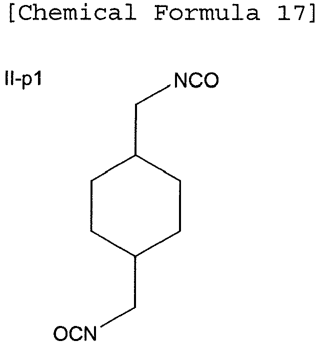

In the polyiso(thio)cyanate component, the amount of compound IIp is preferably 50% by mass or more, more preferably from 55 to 100% by mass, still more preferably from 60 to 100% by mass, and further still more preferably from 70 to 100% by mass from a viewpoint of obtaining the above effect.

The optical resin composition of the present invention may contain a compound represented by the following formula (II-m) (hereinafter, also simply referred to as "compound IIm") in an amount of 50% by mass or less in the polyiso (thio) cyanate component. 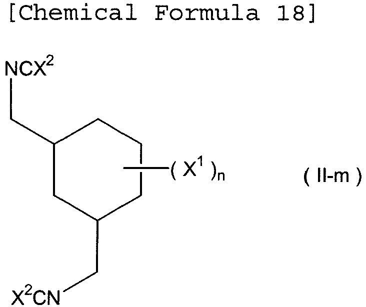 (In formula (II-m), X¹s each independently represent a chlorine atom or a bromine atom, X²s each independently represent an oxygen atom or a sulfur atom, and n represents an integer of 0 to 4.)

By containing a polythiol compound having a sulfide bond and/or a disulfide bond as a polythiol component, a refractive index can be increased. The polythiol compound preferably has two or more sulfide bonds and/or disulfide bonds in total from a viewpoint of increasing a refractive index. By using a polythiol compound having two or more sulfide bonds and/or disulfide bonds in total, and compound Ip or compound IIp in combination thereof, a significant improvement effect of heat resistance can be obtained.

The polythiol component preferably contains a compound having a refractive index of 1.62 or more in an amount of 50% by mass or more in the polythiol component.

The polythiol compound is preferably at least one kind selected from the group consisting of a mixture of 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol, 1,4-dithiane-2,5-di(methanethiol), bis(mercaptoethyl) sulfide, and 1,1,3,3-tetrakis(mercaptomethylthio) propane is preferable.

The optical element of the present invention is obtained by curing the optical resin composition.

Embodiments disclosed herein are exemplary in all respects, and it should be considered that the embodiments are not restrictive. The scope of the present invention is defined not by the above description but by claims, and intends to include all modifications within meaning and a scope equal to claims.

## Claims

1. An optical resin composition comprising:
a polyiso(thio)cyanate component containing a compound represented by the following formula (I-p) or formula (II-p); and
a polythiol component containing a polythiol compound having a sulfide bond and/or a disulfide bond. 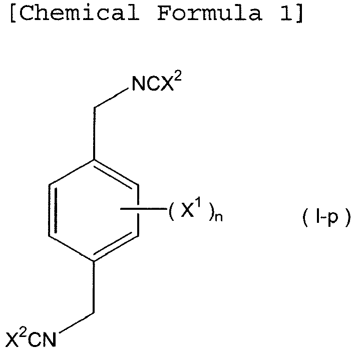 (In formula (I-p), X¹s each independently represent a chlorine atom or a bromine atom, X²s each independently represent an oxygen atom or a sulfur atom, and n represents an integer of 0 to 4.) 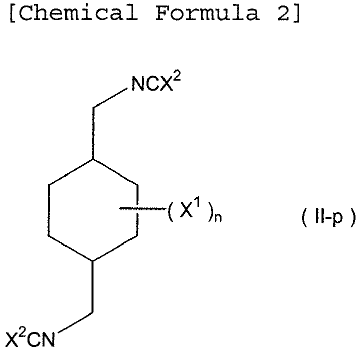 (In formula (II-p), X¹s each independently represent a chlorine atom or a bromine atom, X²s each independently represent an oxygen atom or a sulfur atom, and n represents an integer of 0 to 4.)

2. The optical resin composition according to claim 1, wherein the polythiol component contains a compound having a refractive index of 1.62 or more.

3. The optical resin composition according to claim 1 or 2, wherein the polythiol compound has two or more sulfide bonds and/or disulfide bonds in total.

4. The optical resin composition according to any one of claims 1 to 3, wherein the polythiol component contains a compound having three or more mercapto groups.

5. The optical resin composition according to any one of claims 1 to 4, wherein the polythiol component contains at least one kind selected from the group consisting of 2,3-bis(2-mercaptoethylthio) propane-1-thiol, 5,7-bis(mercaptomethyl)-3,6,9-trithiaundecane-1,11-dithiol, 4,7-bis(mercaptomethyl)-3,6,9-trithiaundecane-1,11-dithiol, and 4,8-bis(mercaptomethyl)-3,6,9-trithiaundecane-1,11-dithiol.

6. The optical resin composition according to any one of claims 1 to 5, further comprising at least one kind selected from the group consisting of a compound having three or more isocyanate groups, a compound having three or more active hydrogen atoms, and a compound having two or more episulfide groups.

7. The optical resin composition according to any one of claims 4 to 6, wherein the polythiol component contains a compound having two mercapto groups.

8. The optical resin composition according to any one of claims 1 to 7, wherein the amount of the compound represented by the formula (I-p) or formula (II-p) is 50% by mass or more in the polyiso(thio)cyanate component.

9. The optical resin composition according to any one of claims 1 to 8, wherein the polyiso(thio)cyanate component contains a compound represented by the following formula (I-m). 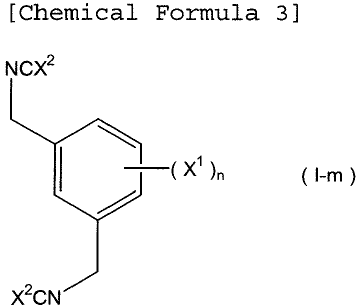 (In formula (I-m), X¹s each independently represent a chlorine atom or a bromine atom, X²s each independently represent an oxygen atom or a sulfur atom, and n represents an integer of 0 to 4.)

10. The optical resin composition according to any one of claims 1 to 8, wherein the polyiso(thio)cyanate component contains a compound represented by the following formula (II-m). 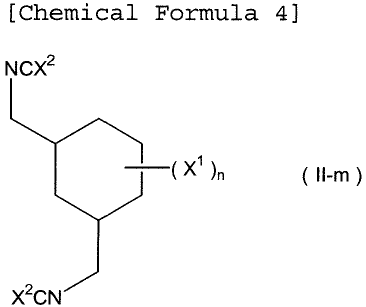 (In formula (II-m), X¹s each independently represent a chlorine atom or a bromine atom, X²s each independently represent an oxygen atom or a sulfur atom, and n represents an integer of 0 to 4.)

11. An optical element obtained by curing the optical resin composition according to any one of claims 1 to 10.

12. A plastic lens for eyeglasses obtained by curing the optical resin composition according to any one of claims 1 to 10.
